(19) Europäisches Patentamt / European Patent Office / Office européen des brevets

(11) EP 4 675 515 A1

(12) EUROPEAN PATENT APPLICATION
published in accordance with Art. 153(4) EPC

(43) Date of publication:
07.01.2026 Bulletin 2026/02

(21) Application number: 23925329.7

(22) Date of filing: 02.03.2023

(51) International Patent Classification (IPC):
G06N 20/00 (2019.01)

(52) Cooperative Patent Classification (CPC):
G06N 20/00

(86) International application number:
PCT/JP2023/007895

(87) International publication number:
WO 2024/180775 (06.09.2024 Gazette 2024/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: FUJITSU LIMITED
Kawasaki-shi, Kanagawa 211-8588 (JP)

(72) Inventors:
• TAKAHASHI, Hidekazu
Kawasaki-shi, Kanagawa 211-8588 (JP)
• MOHRI, Takao
Kawasaki-shi, Kanagawa 211-8588 (JP)

(74) Representative: Hoffmann Eitle
Patent- und Rechtsanwälte PartmbB
Arabellastraße 30
81925 München (DE)

(54) **TRAINING-DATA GENERATION PROGRAM, METHOD, AND DEVICE**

(57) A training-data generation apparatus receives a bias criterion and a degree of priority for each of plural groups each of which is defined by a value of one attribute or values of plural attributes from among plural attributes of plural pieces of first data, generates plural pieces of second data in which data corresponding to each of the plural groups is corrected from among the plural pieces of first data based on the bias criterion and a degree of data correction to each of the plural groups based on the degree of priority, and performs an optimization problem based on the bias criterion with the plural pieces of second data as an initial value to generate training data.

FIG.6

EP 4 675 515 A1

**Description**

FIELD

The technical disclosure relates to a training-data generation program, a training-data generation method, and a training-data generation apparatus.

BACKGROUND

Conventionally, personal data including the respective attribute values of a plurality of attributes and a machine learning model generated by machine learning are used to determine decision-making to an individual, such as entrance examination, employment, or credit. In this case, the attribute values of protected attributes, such as gender and race cause bias, and thus a prediction result from the machine learning model may be discriminatory. For inhibition of such bias in machine learning, there is a field of fairness-aware machine learning not only for an improvement in the accuracy of prediction but also for an improvement in fairness.

A combination of a plurality of attributes may have influence on a prediction result from a machine learning model. In consideration of such a case, there is a technology to rectify the bias of positive rate for each group in which data is classified by a combination of a plurality of attributes.

For example, an apparatus has been developed that acquires a plurality of pieces of data each of which is labeled positive or negative, and calculates, for each of a plurality of types of combination of a first attribute and a second attribute associated with each of the plurality of pieces of data, the ratio between the number of pieces of positive data and the number of pieces of negative data. In a case in which the calculated difference in ratio is a threshold or more, the apparatus specifies change candidate data from among the pieces of data associated with the first attribute and the second attribute corresponding to a first type, based on the ratio for each of the combinations of the first type and the other types included in the plurality of types. The apparatus selects first data from among the pieces of data associated with the first attribute and the second attribute corresponding to the first type, based on the change candidate data specified for each combination. Then, the apparatus causes a computer to perform processing of changing the label of the first data included in the plurality of pieces of data to generate machine learning data.

Citation List

Patent Literature

Patent Literature 1: WO 2022/044064 A

Non Patent Literature

Non Patent Literature 1: Kenji Kobayashi and Yuri Nakao, "One-vs.-One Mitigation of Intersectional Bias: A General Method for Extending Fairness-Aware Binary Classification," DITTET 2021.

SUMMARY

Technical Problem

The above-described conventional technologies aim at bias mitigation between groups for each attribute, that is, aim at elimination of bias in positive rate between groups. For example, machine learning models for facial recognition based on facial images of persons have a lower recognition rate for black women as a case, but preferably have a constant recognition rate, regardless of race and gender. In some cases, it is desired that the bias of a particular group is intentionally controlled. For example, for the purpose of promoting the active participation of women, an IT company desires to employ women in science on a priority basis. In this case, it is desired that, in a machine learning model for determination of recruitment, the bias of women in science is controlled to fulfill a target value.

However, in a case in which bias rectification is performed with an attribute group in focus, the bias of a different attribute group that is not independent of the attribute group may be changed. Thus, the respective bias targets of a plurality of groups are difficult to achieve.

An object of one aspect of the technical disclosure is to control the respective biases of groups each including data classified by an attribute to be brought within a criterion set for the corresponding group.

Solution to Problem

As one mode, the technical disclosure includes receiving a bias criterion and a degree of priority for each of a plurality of groups each of which is defined by a value of one attribute or values of a plurality of attributes from among a plurality of attributes of a plurality of pieces of first data. The technical disclosure further includes generating a plurality of pieces of second data in which data corresponding to each of the plurality of groups is corrected from among the plurality of pieces of first data based on the bias criterion and a degree of data correction to each of the plurality of groups based on the degree of priority. The technical disclosure further includes performing an optimization problem based on the bias criterion with the plurality of pieces of second data as an initial value to generate training data.

Advantageous Effects of Invention

According to one aspect, there is provided an effect enabling control such that the respective biases of groups each including data classified by an attribute value are brought within a criterion set for the corresponding group.

BRIEF DESCRIPTION OF DRAWINGS

Fig. 1 is a functional block diagram of a training-data generation apparatus.
Fig. 2 illustrates an exemplary input data set.
Fig. 3 illustrates exemplary setting information.
Fig. 4 is a block diagram illustrating a schematic configuration of a computer that functions as the training-data generation apparatus.
Fig. 5 is a flowchart illustrating exemplary training-data generation processing.
Fig. 6 is an explanatory diagram for training-data generation processing.

DESCRIPTION OF EMBODIMENTS

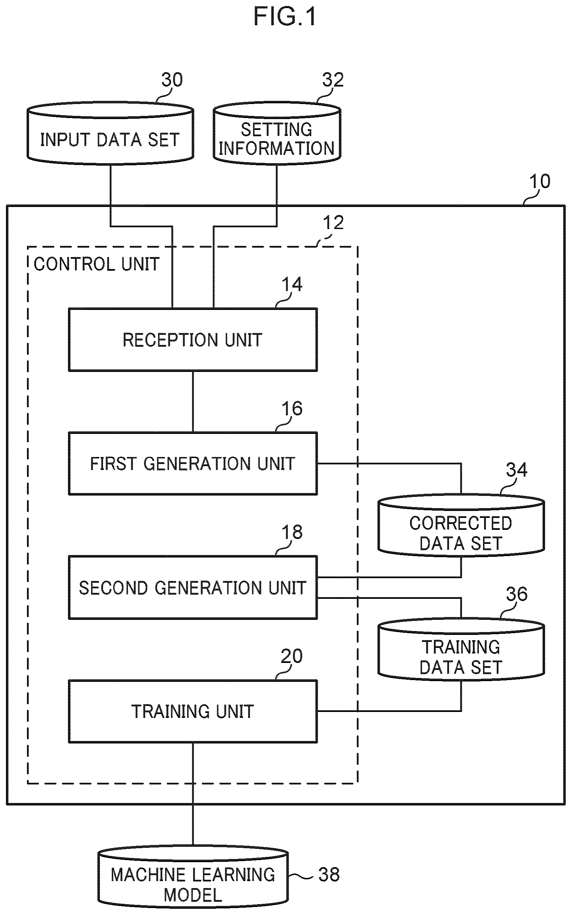

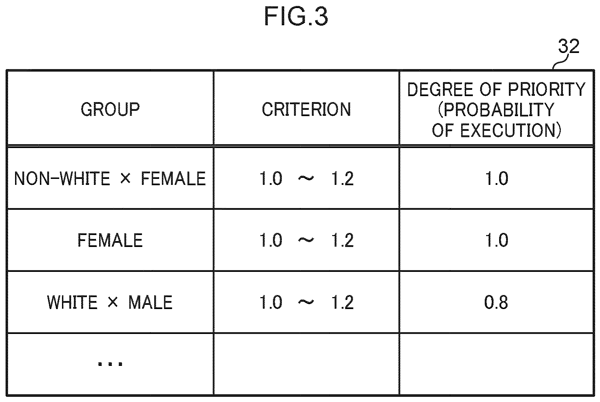

An exemplary embodiment according to the technical disclosure will be described below with reference to the drawings.
As illustrated in Fig. 1, a training-data generation apparatus 10 according to the present embodiment functionally includes a control unit 12. The control unit 12 includes a reception unit 14, a first generation unit 16, a second generation unit 18, and a training unit 20.
The reception unit 14 receives an input data set 30 and setting information 32 input to the training-data generation apparatus 10.

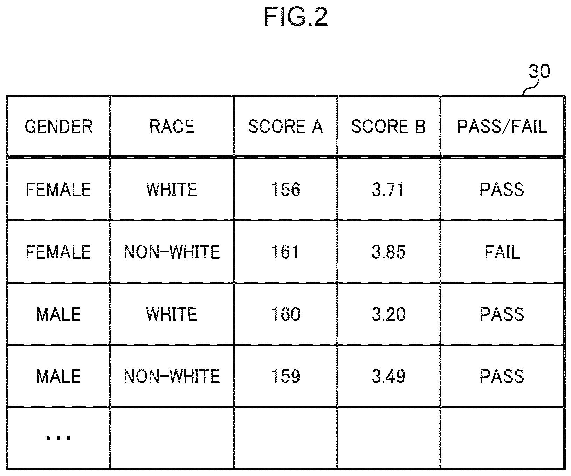

Fig. 2 illustrates an example of the input data set 30. The example of Fig. 2 corresponds to an exemplary data set for generating training data for use in training of a machine learning model 38 for determining a pass or fail in an examination. In the example of Fig. 2, each row corresponds to one piece of data, and each piece of data includes respective attribute values for a plurality of attributes. The attributes include a protected attribute needing inhibition of discriminatory treatment, a different attribute from the protected attribute, and a label attribute indicating whether the data is positive or negative. In the example of Fig. 2, gender and race are exemplary protected attributes, and score A and score B are exemplary different attributes from any protected attribute. In addition, pass/fail is an exemplary label attribute. The input data set is an example of "a plurality of pieces of first data" of the technical disclosure.
As illustrated in Fig. 3, the setting information 32 includes a criterion and the degree of priority for each group. The groups are each defined by the attribute value of one attribute or the attribute values of a plurality of attributes from among the plurality of attributes of the data. In the present embodiment, for the attribute value of each protected attribute or for each combination of the attribute values of a plurality of protected attributes, the data is classified to form a group. Hereinafter, the group name of each group is expressed with the attribute value/attribute values of the data belonging to the corresponding group. For example, as a group based on the attribute value of one attribute, a group having "female" as the attribute value of gender is referred to as "female group" or is simply referred to as "female". For example, as a group with a combination of the attribute values of a plurality of attributes, a group having "female" as the attribute value of gender and "white" as the attribute value of race is referred to as "female × white group" or is simply referred to as "female × white". From the input data set of Fig. 2, a group based on female, a group based on male, a group based on white, a group based on non-white, a group based on white × female, a group based on non-white × female, a group based on white × male, and a group based on non-white × male are formed.
The criterion for each group corresponds to a range indicated with the upper and lower limits of a bias to be achieved by the corresponding group. Hereinafter, the average of the upper and lower limits of the criterion is referred to as "target value". In the present embodiment, the bias is expressed using disparate impact (DI), which is an exemplary fairness indicator, in the following Formula (1).

[Math. 1]

$$DI(group) = \frac{P(y = 1 | group)}{P(y = 1 | other)} \qquad (1)$$

The numerator and denominator on the right side of Formula (1) represent the positive rate of the target group and the positive rate of the non-target group, respectively. The positive rate corresponds to the ratio of the number of pieces of positive data to the total number of pieces of data. For example, the positive corresponds to data in which an attribute corresponding to the objective variable in binary classification has one value, whereas the negative corresponds to data in which the attribute has the other value. In the case of DI < 1, the positive rate of the group is lower than that of the other. In the case of DI > 1, the positive rate of the group is higher than that of the other. For example, in the case of DI(female) = 0.6, the positive rate of female is lower than that of the other. In the case of DI(male) = 1.5, the positive rate of male is higher than that of the other. Note that an indicator for indicating bias is not limited to DI, and thus may be any indicator, provided that a bias in the positive rate of each group can be indicated.

The degree of priority for each group corresponds to the degree of priority in a case in which data correction is performed such that the bias for each group is brought within the criterion (hereinafter, referred to as "bias control"). At the time of bias control, there is a case in which it is desired that the bias of a group is rectified to exceed the target value or a case in which the bias does not necessarily reach the target value, provided that the bias is within the criterion. For example, there is a case in which it is desired that the "non-white × female" group reliably fulfills the target value and the bias of the "white × male" group is brought within the criterion. In consideration of such cases, the degree of priority serves as an indicator for determining the degree of data correction to each group. In the example of Fig. 3, as the degree of priority, the probability of execution indicating the degree of correction (described in detail later) is included in the setting information 32. The probability of execution increases as the degree of priority rises. The probability of execution decreases as the degree of priority falls.

The first generation unit 16 generates a corrected data set in which the data corresponding to each of the plurality of groups is corrected in the input data set, based on the bias criterion and the degree of data correction to each of the plurality of groups based on the degree of priority. The corrected data set is an example of "a plurality of pieces of second data" of the technical disclosure.

Specifically, the first generation unit 16 performs data correction on, as a target, a group included in two groups that are selected from the plurality of groups and are mutually independent. In a case in which bias control on a group has influence on the bias of the other group, the first generation unit 16 determines that the two groups are not mutually independent. For example, in a case in which bias control is performed on "non-white × female", the bias of "female" is influenced. In this case, the bias of the group influenced by the bias control on the other group may be out of the criterion. Thus, first, the first generation unit 16 performs bias control on an independent group as a target.

More specifically, the first generation unit 16 determines whether all pairs, which are each a combination of two groups selected from the plurality of groups, are each independent or non-independent. For example, in a case in which two groups as a pair include the same attribute value, the first generation unit 16 determines that the pair is non-independent. For example, the first generation unit 16 determines that "non-white × female" and "female" are mutually non-independent and "non-white × female" and "white × male" are mutually independent.

For an independent pair, the first generation unit 16 calculates an evaluation score indicating the necessity of correction to each piece of data included in each of the paired groups. For example, the first generation unit 16 trials bias control on each pair and specifies data to be corrected, based on the trial. Note that data to be corrected is only specified and thus is subjected to no actual correction. The first generation unit 16 compiles, for each group, a result from the trial for each pair and calculates the evaluation score for each piece of data in the group, based on how many times each piece of data in the group is specified as data to be corrected. For example, the first generation unit 16 calculates, as the evaluation score, the ratio of the number of times of specification to the number of trials.

For each group in which the evaluation score of each piece of data is calculated (hereinafter, also referred to as "independent group"), the first generation unit 16 calculates a threshold for the evaluation score, based on the difference between the target value and the current DI. For example, as above, in a case in which the evaluation score, which indicates that the data is selected more preferentially as data to be corrected as its value increases, is calculated, the first generation unit 16 calculates a threshold, which corresponds to the difference between the target value and the current DI and decreases as the difference increases. A larger difference between the target value and the current DI requires correction of more data for bias rectification.

The first generation unit 16 selects a group to be rectified from the independent groups and performs bias control on the group. The first generation unit 16 selects, as the group to be rectified, a group having its current DI out of the criterion and including data the evaluation score of which is the calculated threshold or more from among pieces of data not selected as a target to be subjected to data correction. In a case in which a plurality of groups is present as the group to be rectified, the first generation unit 16 may select a group in descending order of difference between the target value and the current DI.

The first generation unit 16 selects pieces of data, the number of which corresponds to the level of difference between the target value multiplied by the probability of execution and the current DI, in descending order of evaluation score from the pieces of data, the evaluation scores of which are each the threshold or more, included in the selected group. Then, as exemplary correction, the first generation unit 16 changes the label attribute of negative data to a positive value such that the DI indicating bias is brought within the criterion. Since the target value multiplied by the probability of execution is used, a group having a low probability of execution set depending on the degree of priority has pieces of data, the number of which is less than the number of pieces of data to be selected originally, to be corrected, leading to a lower degree of bias control.

The first generation unit 16 performs the above-described bias control until there is no group selectable as the group to be rectified and then stores the data set at the point in time when there is no group selectable, as a corrected data set 34, into a predetermined storage area. At this stage, the corrected data set includes an independent group the bias of which has reached the target value, an independent group having not fulfilled its target, and a non-independent group on which no bias control has been performed.

With the corrected data set 34 generated by the first generation unit 16 as the initial value, the second generation unit 18 performs an optimization problem based on the bias criterion to generate training data. As the performance of the optimization problem based on the bias criterion, a mathematical optimization problem is solved such that the bias of each of the plurality of groups is brought within the criterion with the degree of priority taken into account, thereby correcting the selected data. As exemplary correction, the second generation unit 18 changes the label attribute of negative data to a positive value such that the DI indicating bias is brought within the criterion. The second generation unit 18 stores the data set obtained due to solution of the optimization problem, as a training data set 36, into a predetermined storage area.

The training unit 20 trains the machine learning model 38 using the training data set 36 to output a trained machine learning model 38.

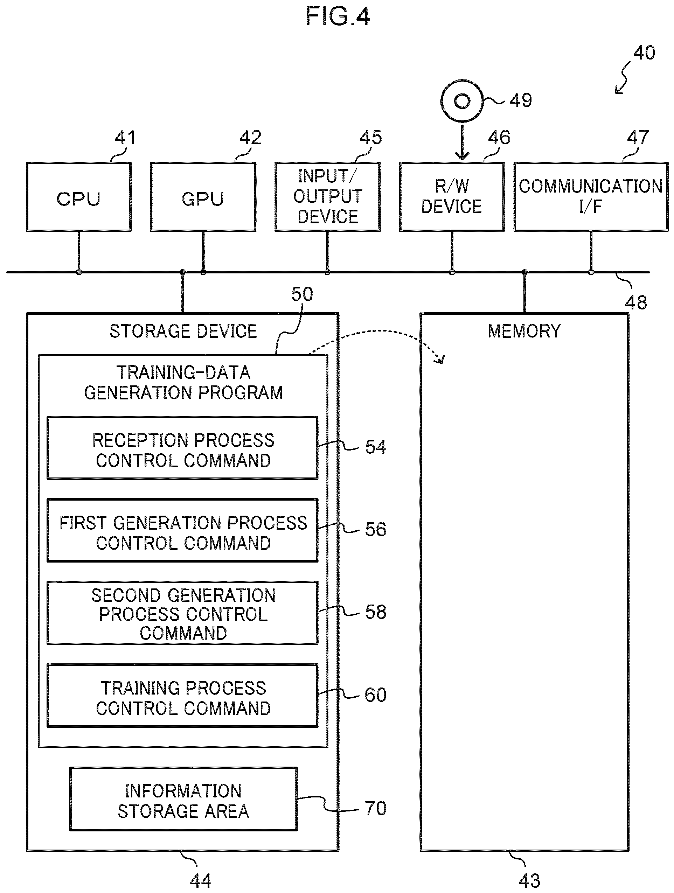

The training-data generation apparatus 10 may be achieved, for example, by a computer 40 illustrated in Fig. 4. The computer 40 includes a central processing unit (CPU) 41, a graphics processing unit (GPU) 42, a memory 43 as a temporary storage area, and a storage device 44 that is nonvolatile. The computer 40 further includes an input/output device 45 including an input device and a display device and a read/write (R/W) device 46 that controls data reading from and data writing to a storage medium 49. The computer 40 further includes a communication interface (I/F) 47 that is connected to a network, such as the Internet. The CPU 41, the GPU 42, the memory 43, the storage device 44, the input/output device 45, the R/W device 46, and the communication I/F 47 are mutually connected through a bus 48.

The storage device 44 is, for example, a hard disk drive (HDD), a solid state drive (SSD), or a flash memory. The storage device 44 as a storage medium stores a training-data generation program 50 for causing the computer 40 to function as the training-data generation apparatus 10. The training-data generation program 50 has a reception process control command 54, a first generation process control command 56, a second generation process control command 58, and a training process control command 60. The storage device 44 has an information storage area 70 that stores information included in the corrected data set 34 and information included in the training data set 36.

The CPU 41 reads the training-data generation program 50 from the storage device 44 and loads the training-data generation program 50 into the memory 43 to sequentially execute the control commands included in the training-data generation program 50. The CPU 41 executes the reception process control command 54 to operate as the reception unit 14 illustrated in Fig. 1. The CPU 41 executes the first generation process control command 56 to operate as the first generation unit 16 illustrated in Fig. 1. The CPU 41 executes the second generation process control command 58 to operate as the second generation unit 18 illustrated in Fig. 1. The CPU 41 executes the training process control command 60 to operate as the training unit 20 illustrated in Fig. 1. Thus, the computer 40 having executed the training-data generation program 50 functions as the training-data generation apparatus 10. Note that the CPU 41 that executes the program corresponds to hardware. Part of the program may be executed by the GPU 42.

Note that the functions achievable by the training-data generation program 50 may be achieved, for example, by a semiconductor integrated circuit, more specifically, an application specific integrated circuit (ASIC) or a field-programmable gate array (FPGA).

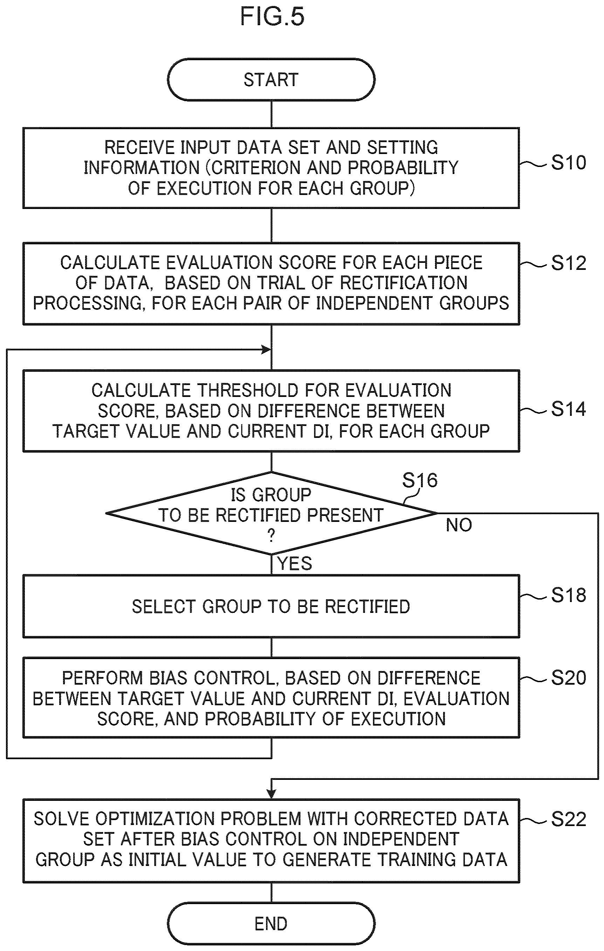

Next, the operation of the training-data generation apparatus 10 according to the present embodiment will be described. In response to an instruction for generation of the training data set 36 after the input data set 30 and the setting information 32 are input to the training-data generation apparatus 10, training-data generation processing illustrated in Fig. 5 is performed in the training-data generation apparatus 10. Note that the training-data generation processing is an exemplary training-data generation method of the technical disclosure.

In Step S10, the reception unit 14 receives the input data set 30 and the setting information 32, which includes the bias criterion and the degree of priority (the probability of execution in the present embodiment) for each group, input to the training-data generation apparatus 10.

Next, in Step S12, the first generation unit 16 determines whether all pairs that are each a combination of two groups selected from the plurality of groups formed from the input data set 30 are each independent or non-independent. The first generation unit 16 trials bias control on each pair of independent groups and specifies data to be corrected, based on the trial. Then, the first generation unit 16 compiles, for each group, a result from the trial for each pair and calculates an evaluation score for each piece of data in the group, based on how many times each piece of data in the group is specified as the data to be corrected.

Next, in Step S14, the first generation unit 16 calculates a threshold for the evaluation score, based on the difference between the target value and the current DI, for each independent group. Next, in Step S16, the first generation unit 16 determines whether or not a group to be rectified is present in the independent groups. The first generation unit 16 determines, as the group to be rectified, a group having its current DI out of the criterion in the independent groups and including data the evaluation score of which is the calculated threshold or more from among pieces of data not selected as a target to be subjected to data correction. In a case in which a group is present as the group to be rectified, the processing proceeds to Step S18.

In Step S18, the first generation unit 16 selects a group determined as the group to be rectified in Step S16 described above. In a case in which a plurality of groups is present as the group to be rectified, the first generation unit 16 may select a group in descending order of difference between the target value and the current DI. Next, in Step S20, the first generation unit 16 selects pieces of data, the number of which corresponds to the level of difference between the target value multiplied by the probability of execution and the current DI, in descending order of evaluation score, from the pieces of data, the evaluation scores of which are each the threshold or more, included in the selected group. Then, as exemplary correction, the first generation unit 16 changes the label attribute of negative data to a positive value such that the DI indicating bias is brought within the criterion, thereby performing bias control, and stores the corrected data set 34 into a predetermined storage area. Then, the processing goes back to Step S14. The first generation unit 16 updates the corrected data set 34 every time bias control is performed in Step S20.

In a case in which it is determined that no group to be rectified is present in Step S16 described above, the processing proceeds to Step S22. In Step S22, with the corrected data set 34 stored in the predetermined storage area as the initial value, the second generation unit 18 performs an optimization problem based on the bias criterion to generate training data. The second generation unit 18 stores the generated training data set 36 into a predetermined storage area, and then the training-data generation processing is terminated.

In response to generation of the training data set 36, the training unit 20 trains the machine learning model 38 using the generated training data set 36 and outputs a trained machine learning model 38.

As described above, the training-data generation apparatus according to the present embodiment receives the bias criterion and the degree of priority for each of a plurality of groups each of which is defined by the attribute value of one attribute or the attribute values of a plurality of attributes from among the plurality of attributes in the input data set. The training-data generation apparatus generates a corrected data set in which the data corresponding to each of the plurality of groups is corrected in the input data set, based on the bias criterion and the degree of data correction to each of the plurality of groups based on the degree of priority. Then, the training-data generation apparatus performs an optimization problem based on the bias criterion with the corrected data set as the initial value to generate training data. Thus, the bias of each of the groups, each of which includes data classified by an attribute value/attribute values can be controlled to be brought within the criterion set to the corresponding group. That is, without mitigating each group, bias control can be performed to meet the purpose of a task using the machine learning model.

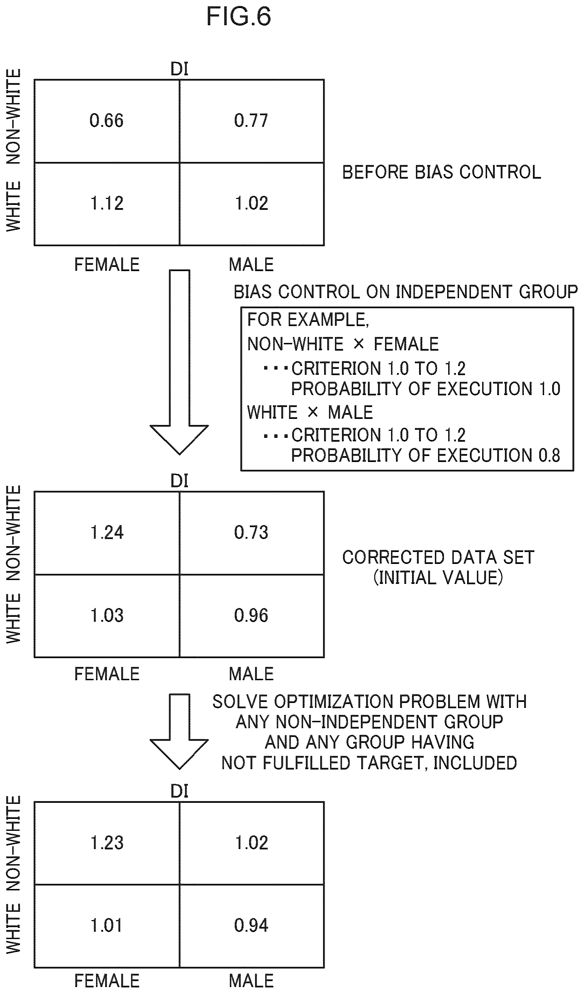

Fig. 6 illustrates a specific example of an outline of the above-described training-data generation processing. The numerical value in each quadrant in Fig. 6 is the DI of a group corresponding to the quadrant. The training-data generation apparatus first performs, on each independent group, bias control based on the bias criterion and the degree of priority (the probability of execution in the above embodiment) of the corresponding group. Then, the training-data generation apparatus obtains, as the initial value for an optimization problem, a corrected data set generated due to the bias control on each independent group. The training-data generation apparatus solves such an optimization problem with any non-independent group and any group having not fulfilled its target included to perform bias control based on the bias criterion and the degree of priority for each group.

In a case in which bias control is performed as a simple optimization problem such that the bias of each of a plurality of non-independent groups fulfills the criterion, the bias criteria of all the groups are needed to be evaluated for positive correction or negative correction to all the data, leading to an increase in the amount of calculation. In the above-described embodiment, a solution to an optimization problem can start with a proper initial solution, so that a proper quasi-optimal solution can be determined with a small amount of calculation.

Note that, in the above-described embodiment, the setting information including the probability of execution as the degree of priority has been described as a case, but this is not limiting. For example, the setting information may include high, intermediate, and low degrees of priority and rankings in order of priority. In this case, preferably, the training-data generation apparatus determines the probability of execution in response to the received degree of priority. For example, the training-data generation apparatus may determine that the probability of execution is "1.0" in a case in which the degree of priority is "high", that the probability of execution is "0.8" in a case in which the degree of priority is "intermediate", and that the probability of execution is "0.6" in a case in which the degree of priority is "low". The training-data generation apparatus may determine a higher probability of execution for a higher ranking in the degree of priority and a lower probability of execution for a lower ranking in the degree of priority.

In the above-described embodiment, the training-data generation program is stored (installed) in advance in the storage device, but this is not limiting. The program according to the technical disclosure may be stored in a storage medium, such as a CD-ROM, a DVD-ROM, or a USB memory, as a form for provision.

Reference Signs List

| | |
|---|---|
| 10 | TRAINING-DATA GENERATION APPARATUS |
| 12 | CONTROL UNIT |
| 14 | RECEPTION UNIT |
| 16 | FIRST GENERATION UNIT |
| 18 | SECOND GENERATION UNIT |
| 20 | TRAINING UNIT |
| 30 | INPUT DATA SET |
| 32 | SETTING INFORMATION |
| 34 | CORRECTED DATA SET |
| 36 | TRAINING DATA SET |
| 38 | MACHINE LEARNING MODEL |
| 40 | COMPUTER |
| 41 | CPU |
| 42 | GPU |
| 43 | MEMORY |
| 44 | STORAGE DEVICE |
| 45 | INPUT/OUTPUT DEVICE |
| 46 | R/W DEVICE |
| 47 | COMMUNICATION I/F |
| 48 | BUS |
| 49 | STORAGE MEDIUM |
| 50 | TRAINING-DATA GENERATION PROGRAM |
| 54 | RECEPTION PROCESS CONTROL COMMAND |
| 56 | FIRST GENERATION PROCESS CONTROL COMMAND |
| 58 | SECOND GENERATION PROCESS CONTROL COMMAND |
| 60 | TRAINING PROCESS CONTROL COMMAND |
| 70 | INFORMATION STORAGE AREA |

**Claims**

1.  A training-data generation program for causing a computer to perform processing comprising:

   receiving a bias criterion and a degree of priority for each of a plurality of groups each of which is defined by a value of one attribute or values of a plurality of attributes from among a plurality of attributes of a plurality of pieces of first data;
   generating a plurality of pieces of second data in which data corresponding to each of the plurality of groups is corrected from among the plurality of pieces of first data based on the bias criterion and a degree of data correction to each of the plurality of groups based on the degree of priority; and
   performing an optimization problem based on the bias criterion with the plurality of pieces of second data as an initial value to generate training data.

2.  The training-data generation program according to claim 1, wherein
   generating the plurality of pieces of second data includes correcting data corresponding to a group included in two groups that are selected from the plurality of groups and are mutually independent.

3. The training-data generation program according to claim 1 or 2, wherein
generating the plurality of pieces of second data includes selecting data to be corrected, based on an evaluation score indicating necessity of correction to each piece of the data included in each of the plurality of groups.

4. The training-data generation program according to claim 3, wherein
generating the plurality of pieces of second data includes calculating the evaluation score, based on whether or not the data is selected more preferentially for correction such that the bias criterion is fulfilled based on the bias criterion and the degree of data correction, for each of pairs each of which is formed of two groups selected from the plurality of groups.

5. The training-data generation program according to claim 1 or 2, wherein
generating the plurality of pieces of second data includes determining that the degree of data correction increases as the degree of priority rises.

6. The training-data generation program according to claim 1 or 2, wherein
performing the optimization problem based on the bias criterion includes solving a mathematical optimization problem such that a bias of each of the plurality of groups fulfills the bias criterion, thereby correcting selected data.

7. The training-data generation program according to claim 1 or 2, wherein
the processing further comprises training a machine learning model using the generated training data.

8. A training-data generation method to be performed by a computer, the training-data generation method comprising:

processing of receiving a bias criterion and a degree of priority for each of a plurality of groups each of which is defined by a value of one attribute or values of a plurality of attributes from among a plurality of attributes of a plurality of pieces of first data;
processing of generating a plurality of pieces of second data in which data corresponding to each of the plurality of groups is corrected from among the plurality of pieces of first data based on the bias criterion and a degree of data correction to each of the plurality of groups based on the degree of priority; and
processing of performing an optimization problem based on the bias criterion with the plurality of pieces of second data as an initial value to generate training data.

9. The training-data generation method according to claim 8, wherein
the processing of generating the plurality of pieces of second data includes correcting data corresponding to a group included in two groups that are selected from the plurality of groups and are mutually independent.

10. The training-data generation method according to claim 8 or 9, wherein
the processing of generating the plurality of pieces of second data includes selecting data to be corrected, based on an evaluation score indicating necessity of correction to each piece of the data included in each of the plurality of groups.

11. The training-data generation method according to claim 10, wherein
the processing of generating the plurality of pieces of second data includes calculating the evaluation score, based on whether or not the data is selected more preferentially for correction such that the bias criterion is fulfilled based on the bias criterion and the degree of data correction, for each of pairs each of which is formed of two groups selected from the plurality of groups.

12. The training-data generation method according to claim 8 or 9, wherein
the processing of generating the plurality of pieces of second data includes determining that the degree of data correction increases as the degree of priority rises.

13. The training-data generation method according to claim 8 or 9, wherein
the processing of performing the optimization problem based on the bias criterion includes solving a mathematical optimization problem such that a bias of each of the plurality of groups fulfills the bias criterion, thereby correcting selected data.

14. The training-data generation method according to claim 8 or 9, further comprising
processing of training a machine learning model using the generated training data.

15. A training-data generation apparatus comprising a control unit that performs processing including:

receiving a bias criterion and a degree of priority for each of a plurality of groups each of which is defined by a value of one attribute or values of a plurality of attributes from among a plurality of attributes of a plurality of pieces of first data;

generating a plurality of pieces of second data in which data corresponding to each of the plurality of groups is corrected from among the plurality of pieces of first data based on the bias criterion and a degree of data correction to each of the plurality of groups based on the degree of priority; and

performing an optimization problem based on the bias criterion with the plurality of pieces of second data as an initial value to generate training data.

16. The training-data generation apparatus according to claim 15, wherein
generating the plurality of pieces of second data includes correcting data corresponding to a group included in two groups that are selected from the plurality of groups and are mutually independent.

17. The training-data generation apparatus according to claim 15 or 16, wherein
generating the plurality of pieces of second data includes selecting data to be corrected, based on an evaluation score indicating necessity of correction to each piece of the data included in each of the plurality of groups.

18. The training-data generation apparatus according to claim 17, wherein
generating the plurality of pieces of second data includes calculating the evaluation score, based on whether or not the data is selected more preferentially for correction such that the bias criterion is fulfilled based on the bias criterion and the degree of data correction, for each of pairs each of which is formed of two groups selected from the plurality of groups.

19. The training-data generation apparatus according to claim 15 or 16, wherein
generating the plurality of pieces of second data includes determining that the degree of data correction increases as the degree of priority rises.

20. The training-data generation apparatus according to claim 15 or 16, wherein
performing the optimization problem based on the bias criterion includes solving a mathematical optimization problem such that a bias of each of the plurality of groups fulfills the bias criterion, thereby correcting selected data.

# FIG.1

# FIG.2

30

| GENDER | RACE | SCORE A | SCORE B | PASS/FAIL |
|--------|------|---------|---------|-----------|
| FEMALE | WHITE | 156 | 3.71 | PASS |
| FEMALE | NON-WHITE | 161 | 3.85 | FAIL |
| MALE | WHITE | 160 | 3.20 | PASS |
| MALE | NON-WHITE | 159 | 3.49 | PASS |
| . . . | | | | |

## FIG.3

32

| GROUP | CRITERION | DEGREE OF PRIORITY (PROBABILITY OF EXECUTION) |
|---|---|---|
| NON-WHITE × FEMALE | 1.0 ~ 1.2 | 1.0 |
| FEMALE | 1.0 ~ 1.2 | 1.0 |
| WHITE × MALE | 1.0 ~ 1.2 | 0.8 |
| ... | | |

# FIG.4

# FIG.5

```
        ┌──────────┐
        │  START   │
        └──────────┘
             │
┌─────────────────────────────────────────┐
│  RECEIVE INPUT DATA SET AND SETTING      │  ~S10
│  INFORMATION (CRITERION AND PROBABILITY  │
│  OF EXECUTION FOR EACH GROUP)            │
└─────────────────────────────────────────┘
             │
┌─────────────────────────────────────────┐
│  CALCULATE EVALUATION SCORE FOR EACH     │  ~S12
│  PIECE OF DATA, BASED ON TRIAL OF        │
│  RECTIFICATION PROCESSING, FOR EACH      │
│  PAIR OF INDEPENDENT GROUPS              │
└─────────────────────────────────────────┘
             │
┌─────────────────────────────────────────┐
│  CALCULATE THRESHOLD FOR EVALUATION      │  ~S14
│  SCORE, BASED ON DIFFERENCE BETWEEN      │
│  TARGET VALUE AND CURRENT DI, FOR EACH   │
│  GROUP                                   │
└─────────────────────────────────────────┘
             │
        ◇ IS GROUP                          S16
        TO BE RECTIFIED PRESENT ?  ── NO ──┐
             │ YES                          │
┌─────────────────────────────────────────┐│
│  SELECT GROUP TO BE RECTIFIED            ││ ~S18
└─────────────────────────────────────────┘│
             │                              │
┌─────────────────────────────────────────┐│
│  PERFORM BIAS CONTROL, BASED ON          ││ ~S20
│  DIFFERENCE BETWEEN TARGET VALUE AND     ││
│  CURRENT DI, EVALUATION SCORE, AND       ││
│  PROBABILITY OF EXECUTION                ││
└─────────────────────────────────────────┘│
             │                              │
             ▼                              │
┌─────────────────────────────────────────┐
│  SOLVE OPTIMIZATION PROBLEM WITH         │  ~S22
│  CORRECTED DATA SET AFTER BIAS CONTROL   │
│  ON INDEPENDENT GROUP AS INITIAL VALUE   │
│  TO GENERATE TRAINING DATA               │
└─────────────────────────────────────────┘
             │
        ┌──────────┐
        │   END    │
        └──────────┘
```

# FIG.6

DI

| | |
|---|---|
| 0.66 | 0.77 |
| 1.12 | 1.02 |

NON-WHITE / WHITE (rows) · FEMALE / MALE (columns)

BEFORE BIAS CONTROL

BIAS CONTROL ON INDEPENDENT GROUP

FOR EXAMPLE,
NON-WHITE × FEMALE
　　・・・CRITERION 1.0 TO 1.2
　　　　PROBABILITY OF EXECUTION 1.0
WHITE × MALE
　　・・・CRITERION 1.0 TO 1.2
　　　　PROBABILITY OF EXECUTION 0.8

DI

| | |
|---|---|
| 1.24 | 0.73 |
| 1.03 | 0.96 |

NON-WHITE / WHITE (rows) · FEMALE / MALE (columns)

CORRECTED DATA SET
(INITIAL VALUE)

SOLVE OPTIMIZATION PROBLEM WITH
ANY NON-INDEPENDENT GROUP
AND ANY GROUP HAVING
NOT FULFILLED TARGET, INCLUDED

DI

| | |
|---|---|
| 1.23 | 1.02 |
| 1.01 | 0.94 |

NON-WHITE / WHITE (rows) · FEMALE / MALE (columns)

## INTERNATIONAL SEARCH REPORT

International application No.

**PCT/JP2023/007895**

| A. | CLASSIFICATION OF SUBJECT MATTER |
|---|---|

*G06N 20/00*(2019.01)i
FI: G06N20/00

According to International Patent Classification (IPC) or to both national classification and IPC

| B. | FIELDS SEARCHED |
|---|---|

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022/044064 A1 (FUJITSU LIMITED) 03 March 2022 (2022-03-03) | 1-20 |
| A | WO 2021/260945 A1 (FUJITSU LIMITED) 30 December 2021 (2021-12-30) | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 May 2023** | **23 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/007895**

| Patent document cited in search report | | | Publication date (day/month/year) | Patent family member(s) | | | Publication date (day/month/year) |
|---|---|---|---|---|---|---|---|
| WO | 2022/044064 | A1 | 03 March 2022 | (Family: none) | | | |
| WO | 2021/260945 | A1 | 30 December 2021 | US | 2023/0117689 | A1 | |
| | | | | EP | 4174734 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022044064 A

**Non-patent literature cited in the description**

- **KENJI KOBAYASHI** ; **YURI NAKAO**. One-vs.-One Mitigation of Intersectional Bias: A General Method for Extending Fairness-Aware Binary Classification. *DITTET*, 2021